# EUROPÄISCHE PATENTSCHRIFT

(11) **EP 3 820 081 B1**
(45) Veröffentlichungstag und Bekanntmachung des Hinweises auf die Patenterteilung: **25.03.2026**
(21) Anmeldenummer: 20191520.4
(22) Anmeldetag: 18.08.2020
(51) Int. Cl.: H04L 9/32

(54) **VERFAHREN ZUR DURCHFÜHRUNG EINER ERLAUBNISABHÄNGIGEN KOMMUNIKATION ZWISCHEN WENIGSTENS EINEM FELDGERÄT DER AUTOMATISIERUNGSTECHNIK UND EINEM BEDIENGERÄT**
METHOD FOR PERFORMING AN AUTHORISATION-DEPENDENT COMMUNICATION BETWEEN AT LEAST ONE FIELD DEVICE INVOLVED IN AUTOMATION TECHNOLOGY AND AN OPERATING DEVICE
PROCÉDÉ PERMETTANT DE METTRE EN OEUVRE UNE COMMUNICATION DÉPENDANTE D'UNE AUTORISATION ENTRE AU MOINS UN APPAREIL DE TERRAIN DE LA TECHNIQUE DE L'AUTOMATISATION ET UN APPAREIL DE COMMANDE

(30) Priorität: 07.11.2019 DE 102019130067
(43) Veröffentlichungstag der Anmeldung: 12.05.2021
(73) Patentinhaber: Krohne Messtechnik GmbH, 47058 Duisburg (DE)
(72) Erfinder: Hottgenroth, Wolfgang, 45259 Essen (DE)
(74) Vertreter: Gesthuysen Patentanwälte

(56) Entgegenhaltungen:
- DE-A1- 102009 007 367
- US-A1- 2015 215 321
- NIEMANN KARL-HEINZ: "IT security extensions for PROFINET", 2019 IEEE 17TH INTERNATIONAL CONFERENCE ON INDUSTRIAL INFORMATICS (INDIN), IEEE, vol. 1, 22 July 2019 (2019-07-22), pages 407 - 412, XP033700856, DOI: 10.1109/INDIN41052.2019.8972209

## Beschreibung

Die Erfindung betrifft ein Verfahren zur Durchführung einer erlaubnisabhängigen Kommunikation zwischen wenigstens einem Feldgerät der Automatisierungstechnik und einem Bediengerät, wobei das Feldgerät und das Bediengerät über eine Kommunikationsverbindung miteinander in Verbindung stehen und wobei das Feldgerät eine elektronische Feldgerätekennung aufweist.

Bei Feldgeräten der Automatisierungstechnik handelt es sich üblicherweise um verschiedene Sensoren oder auch Aktoren, die "im Feld", also in einem technischen Prozess, installiert sind und dort Messwerte aufnehmen, Steuergrößen ausgeben oder gleich als Aktor aktiv auf den Prozess einwirken. Derartige Feldgeräte stehen also in unmittelbarem Kontakt zu einem technischen Prozess, beispielsweise in einer Fertigungsanlage. Feldgeräte der hier angesprochenen Art dienen beispielsweise dazu Durchflüsse, Drücke, Temperaturen, pH-Werte und andere prozessrelevante Größen messtechnisch zu erfassen oder auch auf den Prozess einzuwirken, beispielsweise, indem sie Stellventile ansteuern.

Die hier betrachteten Feldgeräte können mit einem Bediengerät über eine Kommunikationsverbindung miteinander in Verbindung gebracht werden, wobei es mit dem Bediengerät dann möglich ist, von dem Feldgerät Daten aufzunehmen oder auch auf das Feldgerät Einfluss zu nehmen, beispielsweise indem bestimmte Parameter auf das Feldgerät übertragen werden oder indem auch Funktionalitäten in dem Feldgerät freigeschaltet und/oder konfiguriert werden.

Aus verschiedenen Gründen kann es gewünscht sein, dass ein bestimmtes Bediengerät nicht mit einem verbundenen Feldgerät in Kontakt treten soll oder nur in einem bestimmten Umfang mit dem Feldgerät in Kommunikationsbeziehung treten darf. Das Feldgerät muss beispielsweise bestimmten sicherheitstechnischen Anforderungen genügen und bedarf deshalb eines zuverlässigen Schutzes, es können aber auch beispielsweise nur bestimmte Funktionalitäten des Feldgerätes für einen Zugang durch ein Bediengerät vorgesehen sein, beispielsweise durch Erwerb bestimmter Funktions-Bausteine. Bei dem Bediengerät kann es sich zum Beispiel um ein externes Gerät mit einem sogenannten Device Type Manager (DTM) handeln.

Eine aus dem Stand der Technik bekannte Lösung dafür, dass ein Bediengerät bzw. eine auf dem Bediengerät betriebene Software-Komponente nur in bestimmter Weise mit einem bestimmten angeschlossenen Feldgerät in Kommunikationsverbindung treten kann, besteht beispielsweise darin, dass das Bediengerät gerätespezifisch ausgestaltet wird und so nur mit bestimmten Feldgeräten in bestimmter Weise in Kommunikationsbeziehung treten kann. Die Zugangsmöglichkeit des betreffenden Bediengerätes zu bestimmten Feldgeräten wird dabei direkt in die Software-Ausstattung des Bediengerätes eincompiliert. Andere Lösungen sehen vor, dass das Bediengerät zur Laufzeit mit einem Lizenz-Server verbunden sein muss, damit bestimmte Berechtigungen abgefragt werden können. Beide Lösungen sind aufwendig, da in dem ersten Fall eine individuelle Software für das Bediengerät erzeugt werden muss und im zweiten Fall eine Verbindung zu einem Lizenz-Server hergestellt werden muss. Bei der aus der US 2015/0215321 A1 bekannten Lösung wird mit Zugangsinformationen von dem Bediengerät und einem Zugangsserver gearbeitet, wobei beide Informationen auf das Feldgerät übertragen und dort auf Übereinstimmung überprüft werden, was zwangsweise einen Zugang zu dem Feldgerät erforderlich macht, bevor eine Zugangsberechtigung überhaupt überprüft worden ist. Die DE 10 2009 007 367 A1 und der Aufsatz "IT security extensions for PROFINET" (Niemann, Karl-Heinz: "IT security extensions for PROFINET", 2019 IEEE 17th Inter national Conference on Industrial Informatics (INDIN), IEEE, Bd. 1, 22. Juli 2019, Seiten 407-412) beschäftigen sich im weitesten Sinne auch mit der Schaffung einer sicheren Kommunikationsverbindung zu einem Feldgerät.Aufgabe der vorliegenden Erfindung ist es, eine möglichst einfache Lösung dafür zu finden, dass ein Bediengerät mit einem in Kommunikationsverbindung stehenden Feldgerät nur in einem bestimmten Erlaubnisumfang in Kommunikationsverbindung treten kann.

Die zuvor hergeleitete und aufgezeigte Aufgabe ist bei dem eingangs beschriebenen Verfahren zur Durchführung einer erlaubnisabhängigen Kommunikation zwischen dem Feldgerät und dem Bediengerät dadurch gelöst, dass in dem Fall, dass das Bediengerät von einem Erlaubnisgeber eine Erlaubnis zur Kommunikation mit dem Feldgerät hat, auf dem Bediengerät ein von der Feldgerätekennung abhängiges kryptografisches Verifikationsdatum abgelegt wird, dass das Bediengerät vorbereitend zur Kommunikation mit dem Feldgerät von dem Feldgerät die Feldgerätekennung erhält, dass in einem kryptografischen Vergleichsschritt auf dem Bediengerät überprüft wird, ob das Verifikationsdatum in eindeutiger Weise von der Feldgerätekennung abhängt, die das Bediengerät von dem Feldgerät erhalten hat, und dass das Bediengerät für den Fall, dass das Verifikationsdatum in eindeutiger Weise von der Feldgerätekennung abhängt, die das Bediengerät von dem Feldgerät erhalten hat, mit dem Feldgerät kommuniziert, andernfalls nicht mit dem Feldgerät kommuniziert.

Bei dem Erlaubnisgeber kann es sich beispielsweise um den Hersteller des Bediengerätes und/oder des Feldgerätes handeln, der dafür Sorge tragen möchte, dass das Bediengerät nur in Zusammenhang mit bestimmten Feldgeräten betrieben werden kann oder eine bestimmte Software-Komponente des Bediengerätes in Zusammenhang mit bestimmten Feldgeräten betrieben werden kann.

Ein Zusammenhang zwischen dem Bediengerät und dessen Zugriffsmöglichkeit auf das Feldgerät wird dadurch bewerkstelligt, dass auf dem Bediengerät ein von der Feldgerätekennung abhängiges kryptografisches Verifikationsdatum abgelegt wird. Die Feldgerätekennung kann beispielsweise in einer Seriennummer bestehen oder in einer eindeutigen Kennzeichnung des Feldgerätes in dem installierten Prozess. Mit einem kryptografischen Verifikationsdatum ist eine Information gemeint, die verschlüsselungstechnisch - also kryptografisch - bearbeitet ist.

Wenn das Feldgerät und das Bediengerät über eine Kommunikationsverbindung miteinander in Verbindung stehen bzw. in eine Verbindung miteinander gebracht werden, erhält das Bediengerät zunächst von dem Feldgerät dessen Feldgerätekennung. In dem kryptografischen Vergleichsschritt wird dann mit verschlüsselungstechnischen Methoden überprüft, ob das Verifikationsdatum in eindeutiger Weise von der Feldgerätekennung abhängt, also von der Feldgerätekennung, die das Bediengerät von dem Feldgerät erhalten hat. Dabei muss nicht unbedingt erkannt werden, ob die Feldgerätekennung in dem Verifikationsdatum im Klartext enthalten ist, das muss sie nämlich nicht sein. Es ist damit auch gemeint, dass das Verifikationsdatum indirekt, also unter Verwendung der Feldgerätekennung, ermittelt werden kann, und so erkannt wird, ob sich die erhaltene Feldgerätekennung in irgendeiner - auch kryptografisch verborgener - Weise in dem Verifikationsdatum befindet. Wenn in diesem Sinne festgestellt wird, dass das Verifikationsdatum in eindeutiger Weise von der Feldgerätekennung abhängt, also von der Feldgerätekennung, die das Bediengerät von dem Feldgerät erhalten hat, der Vergleichsschritt also positiv ausfällt, wird auf dem Bediengerät entschieden, dass es mit dem Feldgerät kommunizieren kann, bei negativem Ausgang des kryptografischen Vergleichsschrittes kann das Bediengerät bzw. die betroffene Software-Komponente auf dem Bediengerät nicht mit dem Feldgerät kommunizieren. Das Bediengerät entscheidet aufgrund des Ergebnisses des kryptografischen Vergleichsschrittes also selbst, ob es mit dem verbundenen Feldgerät kommunizieren kann oder nicht. Dies ist für viele Anwendungsfälle in der industriellen Praxis jedoch vollkommen ausreichend.

Wenn das Bediengerät keine Erlaubnis zur Kommunikation mit dem Feldgerät hat, kann es natürlich trotzdem sein, dass auf dem Bediengerät ein kryptografisches Verifikationsdatum abgelegt ist, das jedoch nicht von der entsprechenden Feldgerätekennung abhängig ist. In diesem Fall kann gleichwohl der kryptografische Vergleichsschritt durchgeführt werden, jedoch hat er dann ein negatives Ergebnis, sodass das Bediengerät mit dem Feldgerät nicht kommunizieren kann.

Gemäß einer bevorzugten Ausgestaltung des Verfahrens ist vorgesehen, dass als Verifikationsdatum ein erster Lizenzschlüssel mit einem kryptografischen Lizenzalgorithmus berechnet wird in Abhängigkeit von der Feldgerätekennung und in Abhängigkeit von einem geheimen Schlüssel. Diese Berechnung kann beispielsweise auf einem Lizenzserver erfolgen, auf dem bekannt ist, welches Feldgerät mit welcher Feldgerätekennung mittels einer Kommunikationsverbindung durch ein Bediengerät zugreifbar sein soll. Der geheime Schlüssel ist üblicherweise dem Erlaubnisgeber bekannt, insbesondere also dem Hersteller des Bediengerätes und/oder dem Hersteller einer Kommunikationssoftware zur Ausführung auf dem Bediengerät zur Kommunikation mit dem Feldgerät.

In einer bevorzugten Ausgestaltung des vorgenannten Verfahrens ist vorgesehen, dass der kryptografische Lizenzalgorithmus die Berechnung eines Hashwertes aus einer Kombination der Feldgerätekennung und des geheimen Schlüssels durchführt.

Gemäß einer Weiterbildung des Verfahrens wird der geheime Schlüssel auf dem Bediengerät hinterlegt. Dies kann im Klartext erfolgen, insbesondere jedoch geschützt, beispielsweise in der compilierten Kommunikationssoftware des Bediengerätes oder in einer anderen verschlüsselten Form.

In einer Weiterbildung des Verfahrens wird in dem kryptografischen Vergleichsschritt ein zweiter Lizenzschlüssel mit dem kryptografischen Lizenzalgorithmus berechnet in Abhängigkeit von der von dem Feldgerät erhaltenen Feldgerätekennung und in Abhängigkeit von dem auf dem Bediengerät hinterlegten geheimen Schlüssel. Zum Nachweis, ob das Verifikationsdatum in eindeutiger Weise von der Feldgerätekennung abhängt, die das Bediengerät von dem Feldgerät erhalten hat, wird dann geprüft, ob der erste Lizenzschlüssel mit dem zweiten Lizenzschlüssel übereinstimmt.

Bevorzugt wird die Berechnung des zweiten Lizenzschlüssels auf dem Bediengerät durchgeführt. Alternativ kann die Berechnung auch auf einem mit dem Bediengerät verbundenen Rechner ausgeführt werden.

An dem Ausführungsbeispiel wird deutlich, dass die geforderte eindeutige Abhängigkeit des Verifikationsdatums von der Feldgerätekennung, die das Bediengerät von dem Feldgerät erhalten hat, nicht zwingend ein "Enthaltensein" der Feldgerätekennung in dem Verifikationsdatum bedeutet, in dem Sinne, dass die Feldgerätekennung im Klartext aus dem Verifikationsdatum erhalten werden können muss. Die Berechnung eines Hashwertes in Abhängigkeit von einer Feldgerätekennung ist ein geeignetes Mittel, um belegen zu können, dass das Verifikationsdatum in eindeutiger Weise von der Feldgerätekennung abhängt, also von der Feldgerätekennung, die das Bediengerät von dem Feldgerät erhalten hat.

Gemäß einer alternativen Ausgestaltung des Verfahrens, also alternativ zu der Verwendung eines geheimen Schlüssels, ist vorgesehen, dass als Verifikationsdatum ein digitales Zertifikat erstellt wird, wobei das digitale Zertifikat in einem ersten Zertifikatteil einen öffentlichen kryptografischen Schlüssel des Erlaubnisgebers sowie die wenigstens eine Feldgerätekennung derjenigen Feldgeräte, für die das Bediengerät eine Erlaubnis zur Kommunikation hat bzw. erhalten soll, umfasst. In einem zweiten Zertifikatteil umfasst das digitale Zertifikat eine aus dem ersten Zertifikatteil berechnete digitale Signatur, wobei die digitale Signatur mit einem privaten kryptografischen Zertifikat-Schlüssel eines asymmetrischen kryptografischen Zertifikat-Schlüsselpaares berechnet wird.

Während die erste Ausgestaltung des Verfahrens beruhend auf einem geheimen Schlüssel im Wesentlichen dazu geeignet ist, ein Bediengerät einem einzigen Feldgerät bzw. eine Software-Komponente auf einem Bediengerät einem einzigen Feldgerät zuzuordnen, ist die nunmehr behandelte Zertifikat-Lösung auch dazu geeignet, eine Zuordnung zu mehreren Feldgeräten zu ermöglichen.

Das digitale Zertifikat kann vorzugsweise auch von Erlaubnisgeber erstellt werden, insbesondere also vom Hersteller des Bediengeräts und/oder vom Hersteller einer Kommunikationssoftware zur Ausführung auf dem Bediengerät zur Kommunikation mit dem Feldgerät. Dies ist jedoch nicht erforderlich. Alternativ kann das digitale Zertifikat auch von einer vom Erlaubnisgeber verschiedenen Zertifizierungsstelle (Certification Authority, CA) erstellt werden, wie dies beispielsweise von Zertifikaten im Bereich der Internetkommunikation bekannt ist.

In einer Weiterentwicklung des zertifikatbasierten Verfahrens ist vorgesehen, dass in dem kryptografischen Vergleichsschritt auf dem Bediengerät die in dem digitalen Zertifikat enthaltene wenigstens eine Feldgerätekennung ermittelt wird und die wenigstens eine ermittelte Feldgerätekennung mit der wenigstens einen von dem Feldgerät erhaltenen Feldgerätekennung verglichen wird. Bei übereinstimmenden Feldgerätekennungen ist der Nachweis erbracht, dass das Verifikationsdatum in eindeutiger Weise von der Feldgerätekennung abhängt. In diesem Fall kann das Bediengerät mit dem angeschlossenen Feldgerät kommunizieren.

In diesem Zusammenhang ist bei einer besonders bevorzugten Ausgestaltung des Verfahrens vorgesehen, dass der öffentliche Zertifikat-Schlüssel des asymmetrischen kryptografischen Zertifikat-Schlüsselpaares zu dem Bediengerät übertragen wird und mit dem öffentlichen Zertifikat-Schlüssel auf dem Bediengerät die Integrität des Zertifikats überprüft wird. Bei negativem Überprüfungsergebnis wird eine Kommunikation des Bediengeräts bzw. der Software-Komponente des Bediengeräts mit dem angeschlossenen Feldgerät ausgeschlossen und/oder es wird bei negativem Überprüfungsergebnis eine Korruption des Zertifikats angezeigt und/oder weiter gemeldet.

Im Einzelnen gibt es nun eine Vielzahl von Möglichkeiten, das erfindungsgemäße Verfahren zur Durchführung einer erlaubnisabhängigen Kommunikation zwischen wenigstens einem Feldgerät der Automatisierungstechnik und einem Bediengerät auszugestalten. Entsprechende Weiterbildungen sind Gegenstand der Unteransprüche und werden nachfolgend anhand von dargestellten Ausführungsbeispielen beschrieben. In der Zeichnung zeigen
- Fig. 1: ganz schematisch das allgemeine Verfahren zur Durchführung der erlaubnisabhängigen Kommunikation,
- Fig. 2: eine Implementierung des erfindungsgemäßen Verfahrens unter Verwendung eines Lizenzschlüssels, der in Abhängigkeit von der Feldgerätekennung und einem geheimen Schlüssel berechnet wird und
- Fig. 3: eine Ausgestaltung des erfindungsgemäßen Verfahrens basierend auf einem digitalen Zertifikat.

In allen drei Figuren ist ein Verfahren 1 zur Durchführung einer erlaubnisabhängigen Kommunikation 2 zwischen wenigstens einem Feldgerät 3 der Automatisierungstechnik und einem Bediengerät 4 gezeigt. Das Feldgerät 3 und das Bediengerät 4 stehen über eine Kommunikationsverbindung 5 miteinander in Verbindung. Die Kommunikationsverbindung 5 kann eine kabelgebundene Verbindung sein, sie kann aber auch über eine Funkschnittstelle realisiert werden. Es kann sich um eine standardisierte Schnittstelle handeln, aber auch um eine Verbindung, die beispielsweise eine herstellerspezifische, proprietäre Geräteschnittstelle nutzt; darauf kommt es hier nicht an. Das Feldgerät 3 weist jedenfalls eine elektronische Feldgerätekennung IDF auf. Derartige Feldgerätekennungen können beispielsweise schon beim Hersteller vergeben werden, alternativ oder zusätzlich können eindeutige Feldgerätekennungen IDF aber auch vom Verwender des Feldgerätes festgelegt werden; auch darauf kommt es hier nicht an.

Mit den dargestellten Verfahren 1 soll es ermöglicht werden, mit sehr einfachen Mitteln eine erlaubnisabhängige Kommunikation 2 zwischen dem Feldgerät 3 und dem Bediengerät 4 zu realisieren, also beispielsweise, ohne dass eine Verbindung zu einem Lizenzserver erforderlich wäre oder das Bediengerät 4 und/oder das Feldgerät 3 mit einer geräteindividuellen Software betrieben werden müssen.

Allen dargestellten Verfahren 1 ist gemeinsam, dass in dem Fall, dass das Bediengerät 4 von einem Erlaubnisgeber 6 eine Erlaubnis zur Kommunikation mit dem Feldgerät 3 hat oder diese erhalten soll, auf dem Bediengerät 4 ein von der Feldgerätekennung IDF_L abhängiges kryptografisches Verifikationsdatum VDL abgelegt wird. Die Feldgerätekennung wird hier mit "IDF_L" bezeichnet und nicht nur mit "IDF", um unterscheidbar zu machen, wo die Feldgerätekennung vorliegt. Die Feldgerätekennung IDF ist in den Ausführungsbeispielen auf dem Feldgerät 3 selbst verortet. Die Feldgerätekennung IDF_L ist hingegen die Feldgerätekennung, die z. B. bei dem Erlaubnisgeber 6 vorliegt. Für den Fall, dass IDF und IDF_L übereinstimmen, soll eine Kommunikation zwischen Feldgerät 3 und Bediengerät 4 zustande kommen, sonst nicht. Das kryptografische Verifikationsdatum VDL ist jedenfalls so beschaffen, das es Träger der Erlaubnis zur Kommunikation ist. Ferner ist vorgesehen, dass das Bediengerät 4 vorbereitend zur Kommunikation mit dem Feldgerät 3 von dem Feldgerät 3 die Feldgerätekennung IDF erhält. In einem kryptografischen Vergleichsschritt 9 wird überprüft, ob das Verifikationsdatum VDL in eindeutiger Weise von der Feldgerätekennung IDF abhängt, die das Bediengerät 4 von dem Feldgerät 3 erhalten hat. Der kryptografische Vergleichsschritt 9 wird in allen Ausführungsbeispielen auf dem Bediengerät 4 durchgeführt. Für den Fall, dass das Verifikationsdatum VDL in eindeutiger Weise von der Feldgerätekennung IDF abhängt, kann das Bediengerät 4 mit dem Feldgerät 3 kommunizieren, andernfalls kann es nicht mit dem Feldgerät 3 kommunizieren. Die interne Prüfung auf dem Bediengerät 4 entscheidet also darüber, ob das Bediengerät 4 oder eine Software-Komponente, die auf dem Bediengerät 4 betrieben wird, die Kommunikationsverbindung 5 dazu nutzen kann, um mit dem Feldgerät 3 zu kommunizieren.

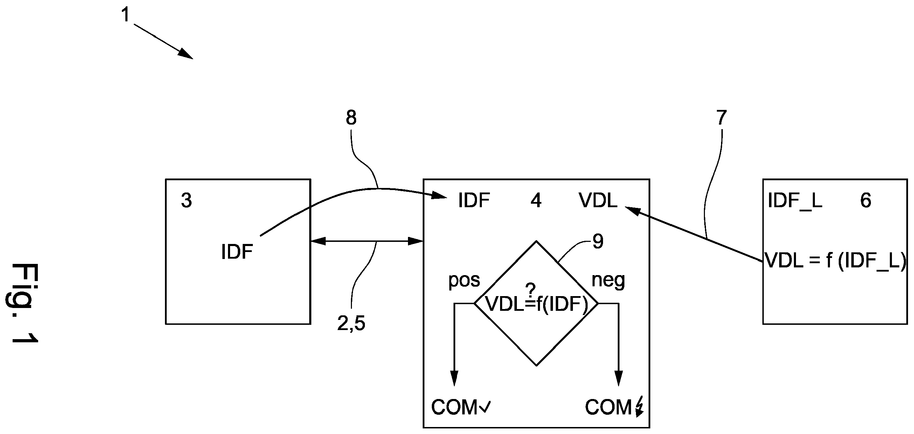

Dass das kryptografische Verifikationsdatum VDL von einer Feldgerätekennung abhängig ist, ist in Fig. 1 dadurch angedeutet, dass das Verifikationsdatum VDL eine Funktion f von der Feldgerätekennung IDF_L ist. Wie oben bereits erläutert, ist hier nicht für die Feldgerätekennung das Kürzel IDF verwendet worden, sondern das Kürzel IDF_L, um deutlich zu machen, dass die auf dem Feldgerät 3 verortete Feldgerätekennung IDF unterschiedlich sein kann von der Feldgerätekennung IDF_L - in den dargestellten Ausgestaltungen eine Kenntnis des Erlaubnisgebers 6. Es handelt sich bei der Feldgerätekennung IDF_L also um die Kennung jenes Feldgerätes, dem eine Berechtigung zur Kommunikation mit einem bestimmten Bediengerät erteilt werden soll, bei der Feldgerätekennung IDF handelt es sich um die Feldgerätekennung des tatsächlich angeschlossenen Feldgerätes.

In allen Darstellungen findet der kryptografische Vergleichsschritt 9 auf dem Bediengerät 4 statt und ist dort als Raute dargestellt. In Fig. 1 wird ganz allgemein geprüft, ob das Verifikationsdatum VDL in eindeutiger Weise von der Feldgerätekennung IDF abhängt. Dies kann beispielsweise der Fall sein, wenn die Feldgerätekennung IDF im Klartext in dem Verifikationsdatum VDL enthalten ist. Dies ist aber nur eine mögliche Variante und muss so nicht realisiert sein. Allgemeiner muss lediglich eine eindeutige Abhängigkeit des Verifikationsdatums VDL von einer zu überprüfenden Feldgerätekennung IDF vorhanden sein, sodass grundsätzlich überprüft werden kann, ob eine Kommunikation mit dem Feldgerät 3 mit der Kennung IDF dem Bediengerät 4 gestattet sein soll oder nicht.

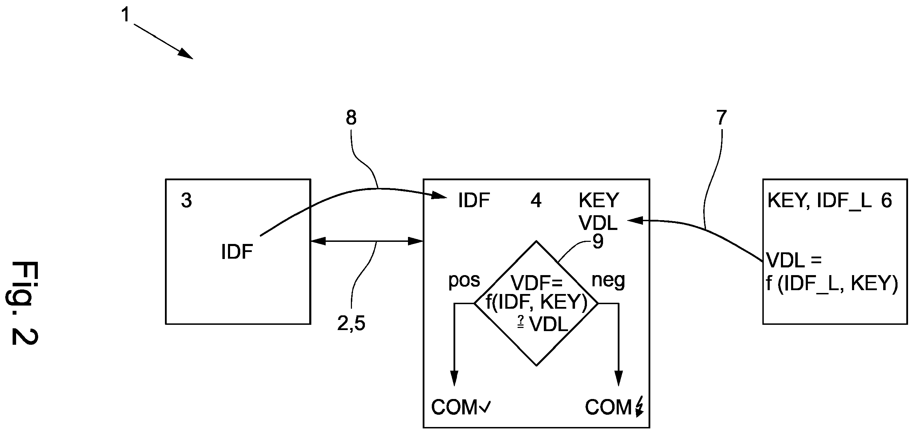

Schon das Ausführungsbeispiel in Fig. 2 macht deutlich, was damit gemeint ist, dass die Feldgerätekennung IDF nicht im Klartext in dem Verifikationsdatum VDL enthalten sein muss. In Fig. 2 ist gezeigt, dass als Verifikationsdatum VDL ein erster Lizenzschlüssel mit einem kryptografischen Lizenzalgorithmus f berechnet wird, nämlich in Abhängigkeit von der Feldgerätekennung IDF_L und in Abhängigkeit von einem geheimen Schlüssel KEY. Hier ist der geheime Schlüssel KEY dem Erlaubnisgeber 6 bekannt, der beispielsweise Hersteller des Bediengerätes 4 ist oder auch Hersteller einer Kommunikationssoftware zur Ausführung im Bediengerät 4 zur Kommunikation mit dem Feldgerät 3 sein kann.

In dem in Fig. 2 dargestellten Ausführungsbeispiel führt der kryptografische Lizenzalgorithmus f die Berechnung eines Hashwertes aus einer Kombination der Feldgerätekennung IDF_L und des geheimen Schlüssels KEY durch.

Im Falle des in Fig. 2 dargestellten Verfahrens 1 wird der geheime Schlüssel KEY auf dem Bediengerät 4 hinterlegt. Dadurch ist es dann möglich, den kryptografischen Vergleichsschritt 9 auf dem Bediengerät 4 auszuführen. Hier wird nämlich in dem kryptografischen Vergleichsschritt 9 ein zweiter Lizenzschlüssel VDF=f(IDF, KEY) mit dem kryptografischen Lizenzalgorithmus f berechnet in Abhängigkeit von der von dem Feldgerät 3 erhaltenen Feldgerätekennung IDF und von dem auf dem Bediengerät 4 hinterlegten Geheimschlüssel KEY. Zum Nachweis, ob die von dem Bediengerät 4 erhaltene Feldgerätekennung IDF in dem Verifikationsdatum VDL enthalten ist, wird geprüft, ob der erste Lizenzschlüssel VDL mit dem zweiten Lizenzschlüssel VDF=f(IDF, KEY) übereinstimmt. Die Überprüfung auf die Übereinstimmung der Lizenzschlüssel kann positiv verlaufen (pos) und damit in einer Freigabe der Kommunikation enden, sie kann aber auch negativ verlaufen (neg) und damit zu einem Blockieren der Kommunikation zwischen dem Bediengerät 4 und dem Feldgerät 3 führen.

In der Praxis wird es so sein, dass der geheime Schlüssel KEY und das Verifikationsdatum VDL zu unterschiedlichen Zeiten auf das Bediengerät 4 übertragen werden. Der geheime Schlüssel KEY wird vorzugsweise bei der Fertigung bzw. während der Fertigung beim "Taufen" des Geräts unveränderlich (bzw. nur mit "factory privileges" veränderbar) hinterlegt, während das Verifikationsdatum VDL vorzugsweise nach der Inbetriebnahme des Bediengeräts 4 im Feld oder bei der kundenspezifischen Provisionierung des Bediengeräts 4 in der Fabrik veränderlich im Bediengerät 4 hinterlegt wird.

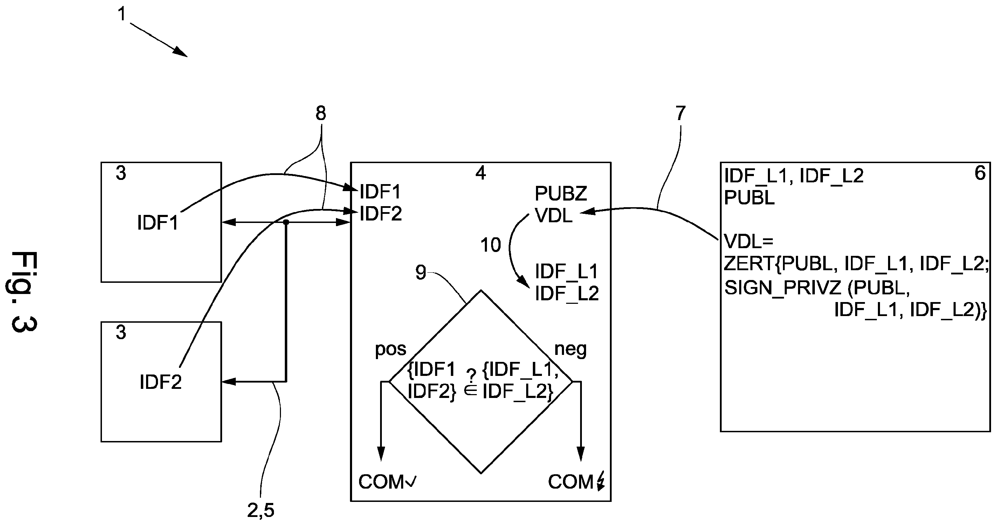

Bei dem in Fig. 3 dargestellten Ausführungsbeispiel des Verfahrens 1 handelt es sich um eine alternative Umsetzung zu der in Fig. 2 dargestellten Umsetzung unter Verwendung eines geheimen Schlüssels. Die in Fig. 3 dargestellte alternative Lösung arbeitet mit digitalen Zertifikaten. Als Verifikationsdatum VDL wird also ein digitales Zertifikat ZERT erstellt, wobei das digitale Zertifikat ZERT in einem ersten Zertifikatteil einen öffentlichen kryptografischen Schlüssel PUBL des Erlaubnisgebers 6 sowie die Feldgerätekennung IDF_L bzw. die Feldgerätekennungen IDF_L1, IDF_L2 derjenigen Feldgeräte, für die das Bediengerät 4 eine Erlaubnis zur Kommunikation erhalten soll, umfasst. In einem zweiten Zertifikatteil umfasst das digitale Zertifikat ZERT eine aus dem ersten Zertifikatteil berechnete digitale Signatur SIGN_PRIVZ. Die digitale Signatur wird - wie für Zertifikate üblich - mit einem privaten kryptografischen Zertifikat-Schlüssel PRIVZ eines asymmetrischen kryptografischen Zertifikat-Schlüsselpaares PUBZ, PRIVZ berechnet. Dieses Schlüsselpaar wird üblicherweise von einer Zertifizierungsbehörde ausgestellt. Es kann sich dabei um eine von dem Erlaubnisgeber 6 vollkommen unabhängige Stelle handeln, natürlich kann aber auch der Erlaubnisgeber 6 (beispielsweise in Form des Herstellers des Bediengerätes 4 und/oder des Feldgerätes 3 und/oder einer Kommunikationssoftware für das Bediengerät 4) als Zertifizierungsstelle arbeiten.

In dem kryptografischen Vergleichsschritt 9 wird auf dem Bediengerät 4 die in dem digitalen Zertifikat ZERT enthaltene wenigstens eine Feldgerätekennung IDF_L ermittelt 10. Im vorliegenden Fall sind zwei Feldgerätekennungen in dem digitalen Zertifikat ZERT enthalten, nämlich die Feldgerätekennungen IDF_L1 und IDF_L2. Die ermittelten Feldgerätekennungen IDF_L1, IDF_L2 werden mit den von dem Feldgerät 3 erhaltenen Feldgerätekennungen IDF1, IDF2 verglichen. Bei Übereinstimmung der Feldgerätekennungen IDF1, IDF2, IDF_L1, IDF_L2 ist der Nachweis erbracht, dass die betreffenden und von dem Bediengerät 3 erhaltenen Feldgerätekennungen IDF1, IDF2 in dem Verifikationsdatum VDL enthalten sind und insoweit das Verifikationsdatum VDL in eindeutiger Weise von der Feldgerätekennung IDF abhängt. Entsprechend wird die Kommunikation zwischen dem Bediengerät 4 und dem Feldgerät 3 bzw. den Feldgeräten 3 freigegeben oder auch gesperrt.

In Fig. 3 ist ferner zu erkennen, dass der öffentliche Zertifikat-Schlüssel PUBZ des asymmetrischen kryptografischen Zertifikat-Schlüsselpaares PUBZ, PRIVZ zu dem Bediengerät 4 übertragen worden ist. Mit dem öffentlichen Zertifikat-Schlüssel PUBZ wird auf dem Bediengerät 4 die Integrität des Zertifikats ZERT überprüft. Dies ist eine zusätzliche Prüfung zu der Prüfung im Vergleichsschritt 9. Auch hier wird bei negativem Überprüfungsergebnis eine Kommunikation des Bediengeräts 4 mit dem wenigstens einen Feldgerät 3 ausgeschlossen. Alternativ oder zusätzlich könnte vorgesehen sein, dass bei negativem Überprüfungsergebnis eine Korruption des Zertifikats ZERT angezeigt und/oder weitergemeldet wird.

In der Praxis wird es so sein, dass der öffentliche Schlüssel PUBZ - wie der geheime Schlüssel KEY in Fig. 2 - bereits zur Fertigungszeit unveränderlich (bzw. nur mit "factory privilieges" veränderlich) im Bediengerät 4 hinterlegt wird. Der zugehörige private Schlüssel PRIVZ wird vom Erlaubnisgeber geheim gehalten. Die Erlaubnis VDL besteht aus dem öffentlichen Schlüssel PUBL, der zusammen mit den Geräteidentifikationen IDF_L mit dem privaten Schlüssel PRIVZ des Erlaubnisgebers 6 signiert wird. Der Dreitupel PUBL, IDF_Ln, SIGN_PRIVZ werden dann zur Bildung des Verifikationsdatums VDL herangezogen. Das Verifikationsdatum VDL kann mit hilfe des öffentlichen Schlüssels PUBZ überprüft werden. Das Verifikationsdatum VDL wird vorzugsweise nach der Inbetriebnahme des Bediengeräts 4 im Feld oder bei der kundenspezifischen Provisionierung des Bediengeräts 4 in der Fabrik veränderlich im Bediengerät 4 hinterlegt.

### Bezugszeichen

- 1: Verfahren
- 2: Kommunikation
- 3: Feldgerät
- 4: Bediengerät
- 5: Kommunikationsverbindung
- 6: Erlaubnisgeber
- 7: Ablegen des Verifikationsdatums
- 8: Erhalten der Feldgerätekennung
- 9: Vergleichsschritt
- 10: Ermitteln der Feldgerätekennung

- IDF_L: Feldgerätekennung zur Verleihung einer Kommunikationserlaubnis
- IDF: Feldgerätekennung des tatsächlich angeschlossenen Feldgerätes
- VDL: Verifikationsdatum
- COM: Erlaubnis/Verbot Kommunikation
- KEY: geheimer Schlüssel
- ZERT: digitales Zertifikat
- PUBZ: öffentlicher Schlüssel der Zertifizierungsstelle
- PRIVZ: privater Schlüssel der Zertifizierungsstelle
- PUBL: öffentlicher Schlüssel des Erlaubnisgebers

## Patentansprüche

1. Verfahren (1) zur Durchführung einer erlaubnisabhängigen Kommunikation (2) zwischen wenigstens einem Feldgerät (3) der Automatisierungstechnik und einem Bediengerät (4), wobei das Feldgerät (3) und das Bediengerät (4) über eine Kommunikationsverbindung (5) miteinander in Verbindung stehen und wobei das Feldgerät (3) eine elektronische Feldgerätekennung IDF aufweist, wobei in dem Fall, dass das Bediengerät (4) von einem Erlaubnisgeber (6) eine Erlaubnis zur Kommunikation mit dem Feldgerät (3) hat, auf dem Bediengerät (4) ein von einer Feldgerätekennung IDF_L, welche Feldgerätekennung IDF L bei dem Erlaubnisgeber vorliegt, abhängiges kryptografisches Verifikationsdatum VDL abgelegt (7) wird, wobei das kryptografische Verifikationsdatum VDL eine Funktion f von der Feldgerätekennung IDF L ist, und wobei das Bediengerät (4) vorbereitend zur Kommunikation mit dem Feldgerät (3) von dem Feldgerät (3) die Feldgerätekennung IDF erhält (8), wobei in einem kryptografischen Vergleichsschritt (9) auf dem Bediengerät (4) überprüft wird, ob das Verifikationsdatum VDL in eindeutiger Weise von der Feldgerätekennung IDF abhängt, die das Bediengerät (4) von dem Feldgerät (3) erhalten hat, und wobei das Bediengerät (4) für den Fall, dass das Verifikationsdatum VDL in eindeutiger Weise von der Feldgerätekennung IDF abhängt und dass die Feldgerätekennung IDF, die das Bediengerät (4) von dem Feldgerät (3) erhalten hat, mit der Feldgerätekennung IDF_L übereinstimmt, mit dem Feldgerät (3) kommuniziert, andernfalls nicht mit dem Feldgerät (3) kommuniziert.

2. Verfahren (1) nach Anspruch 1, **dadurch gekennzeichnet, dass** als Verifikationsdatum VDL ein erster Lizenzschlüssel mit einem kryptografischen Lizenzalgorithmus f berechnet wird in Abhängigkeit von der Feldgerätekennung IDF L und in Abhängigkeit von einem geheimen Schlüssel KEY, insbesondere wobei der geheime Schlüssel KEY dem Erlaubnisgeber (6) bekannt ist, insbesondere bekannt ist dem Hersteller des Bediengerätes (4) und/oder dem Hersteller einer Kommunikationssoftware zur Ausführung auf dem Bediengerät zur Kommunikation mit dem Feldgerät (3).

3. Verfahren (1) nach Anspruch 2, **dadurch gekennzeichnet, dass** der kryptografische Lizenzalgorithmus f die Berechnung eines Hashwertes aus einer Kombination der Feldgerätekennung IDL und des geheimen Schlüssels KEY durchführt.

4. Verfahren (1) nach Anspruch 2 oder 3, **dadurch gekennzeichnet, dass** der geheime Schlüssel KEY auf dem Bediengerät (4) hinterlegt wird, insbesondere geschützt auf dem Bediengerät (4) hinterlegt wird, insbesondere in der kompilierten Kommunikationssoftware oder in einer anderen verschlüsselten Form.

5. Verfahren (1) nach einem der Ansprüche 2 bis 4, **dadurch gekennzeichnet, dass** in dem kryptografischen Vergleichsschritt (9) ein zweiter Lizenzschlüssel VDF mit dem kryptografischen Lizenzalgorithmus f berechnet wird in Abhängigkeit von der von dem Feldgerät (3) erhaltenen Feldgerätekennung IDF und in Abhängigkeit von dem auf dem Bediengerät (4) hinterlegten geheimen Schlüssel KEY, und dass zum Nachweis, ob das Verifikationsdatum VDL in eindeutiger Weise von der Feldgerätekennung IDF abhängt, geprüft wird, ob der erste Lizenzschlüssel mit dem zweiten Lizenzschlüssel VDF übereinstimmt.

6. Verfahren (1) nach Anspruch 5, **dadurch gekennzeichnet, dass** die Berechnung des zweiten Lizenzschlüssels VDF auf dem Bediengerät (4) erfolgt.

7. Verfahren (1) nach Anspruch 1, **dadurch gekennzeichnet, dass** als Verifikationsdatum VDL ein digitales Zertifikat ZERT erstellt wird, wobei das digitale Zertifikat ZERT in einem ersten Zertifikatteil einen öffentlichen kryptografischen Schlüssel PUBL des Erlaubnisgebers (6) sowie die wenigstens eine Feldgerätekennung IDF_L, IDF_L1, IDF_L2 derjenigen Feldgeräte (3), für die das Bediengerät (4) eine Erlaubnis zur Kommunikation hat, umfasst und wobei das digitale Zertifikat ZERT in einem zweiten Zertifikatteil eine aus dem ersten Zertifikatteil berechnete digitale Signatur SIGN_PRIVZ umfasst, wobei die digitale Signatur SIGN_PRIVZ mit einem privaten kryptografischen Zertifikat-Schlüssel PRIVZ eines asymmetrischen kryptografischen Zertifikat-Schlüsselpaares PUBZ, PRIVZ berechnet wird.

8. Verfahren (1) nach Anspruch 7, **dadurch gekennzeichnet, dass** das digitale Zertifikat ZERT vom Erlaubnisgeber (6) erstellt wird, insbesondere vom Hersteller des Bediengerätes (4) und/oder vom Hersteller einer Kommunikationssoftware zur Ausführung auf dem Bediengerät (4) zur Kommunikation mit dem Feldgerät (3).

9. Verfahren (1) nach Anspruch 7 oder 8, **dadurch gekennzeichnet, dass** in dem kryptografischen Vergleichsschritt (9) auf dem Bediengerät (4) die in dem digitalen Zertifikat ZERT enthaltene wenigstens eine Feldgerätekennung IDF_L1, IDF_L2 ermittelt (10) wird und wenigstens eine ermittelte Feldgerätekennung IDF_L1, IDF_L2 mit der wenigstens einen von dem Feldgerät (3) erhaltenen Feldgerätekennung IDF1, IDF2 verglichen wird und bei übereinstimmenden Feldgerätekennungen der Nachweis erbracht ist, dass das Verifikationsdatum VDL in eindeutiger Weise von der Feldgerätekennung IDF abhängt, da die betreffende, wenigstens eine von dem Bediengerät (4) erhaltene Feldgerätekennung IDF1, IDF2 in dem Verifikationsdatum VDL enthalten ist.

10. Verfahren (1) nach einem der Ansprüche 7 bis 9, **dadurch gekennzeichnet, dass** der öffentliche Zertifikat-Schlüssel PUBZ des asymmetrischen kryptografischen Zertifikat-Schlüsselpaares PUBZ, PRIVZ zu dem Bediengerät (4) übertragen wird und mit dem öffentlichen Zertifikat-Schlüssel PUBZ auf dem Bediengerät (4) die Integrität des Zertifikats ZERT überprüft wird, wobei bei negativem Überprüfungsergebnis eine Kommunikation des Bediengeräts (4) mit dem wenigstens einen Feldgerät (3) ausgeschlossen wird und/oder wobei bei negativem Überprüfungsergebnis eine Korruption des Zertifikats ZERT angezeigt und/oder weitergemeldet wird.

## Claims

1. Method (1) for carrying out permission-dependent communication (2) between at least one field device (3) of automation technology and an operating device (4), wherein the field device (3) and the operating device (4) are connected to one another via a communication link (5) and wherein the field device (3) has an electronic field device identifier IDF, wherein, in the event that the operating device (4) has permission from a permission provider (6) to communicate with the field device (3), a cryptographic verification datum VDL which is dependent on the field device identifier IDF_L, which field device identifier IDF_L is present at the permission provider, is stored (7) on the operating device (4), wherein the cryptographic verification datum VDL depends f on the field device identifier IDF_L, and wherein the operating device (4) receives (8) the field device identifier IDF from the field device (3) in preparation for communication with the field device (3),
wherein a cryptographic comparison step (9) is used to check whether the verification datum VDL depends, in an unambiguous manner, on the field device identifier IDF which the operating device (4) has received from the field device (3), and
wherein the operating device (4) communicates with the field device (3) in the event that the verification datum VDL depends, in an unambiguous manner, on the field device identifier IDF and that the field device identifier IDF, which to operating device (4) received from the field device (3) corresponds to the field device identifier IDF_L, otherwise it does not communicate with the field device (3).

2. Method (1) according to claim 1, **characterized in that**, as verification datum VDL, a first license key with a cryptographic license algorithm f is calculated in dependence on the field device identifier IDF_L and in dependence on a secret key KEY, in particular wherein the secret key KEY is known to the permission provider (6), in particular known to the manufacturer of the operating device (4) and/or the manufacturer of a communication software for execution on the operating device for communication with the field device (3).

3. Method (1) according to claim 2, **characterized in that** the cryptographic license algorithm f carries out the calculation of a hash value from a combination of the field device identifier IDL and the secret key KEY.

4. Method (1) according to claim 2 or 3, **characterized in that** the secret key KEY is stored on the operating device (4), in particular is stored in a protected manner on the operating device (4), in particular in the compiled communication software or in another encrypted form.

5. Method (1) according to any one of claims 2 to 4, **characterized in that** a second license key VDF is calculated in the cryptographic comparison step (9) with the cryptographic license algorithm f in dependence on the field device identifier IDF obtained from the field device (3) and in dependence on the secret key KEY stored on the operating device (4), and that to prove whether the verification datum VDL depends, in an unambiguous manner, on the field device identifier IDF, it is checked whether the first license key matches the second license key VDF.

6. Method (1) according to claim 5, **characterized in that** the calculation of the second license key VDF is carried out on the operating device (4).

7. Method (1) according to claim 1, **characterized in that** a digital certificate ZERT is generated as the verification datum VDL, wherein, in a first certificate part, the digital certificate ZERT contains a public cryptographic key PUBL of the permission provider (6) and the at least one field device identifier IDF_L, IDF_L1, IDF_L2 of those field devices (3), for which the operating device (4) has permission to communicate, and wherein, in a second certificate part, the digital certificate ZERT comprises a digital signature SIGN_PRIVZ calculated from the first certificate part, wherein the digital signature SIGN_PRIVZ is calculated with a private cryptographic certificate key PRIVZ of an asymmetric cryptographic certificate key pair PUBZ, PRIVZ.

8. Method (1) according to claim 7, **characterized in that** the digital certificate ZERT is generated by the permission provider (6), in particular by the manufacturer of the operating device (4) and/or by the manufacturer of a communication software for execution on the operating device (4) for communication with the field device (3).

9. Method (1) according to claim 7 or 8, **characterized in that** the at least one field device identifier IDF_L1, IDF_L2 contained in the digital certificate ZERT is determined (10) in the cryptographic comparison step (9) on the operating device (4) and at least one determined field device identifier IDF_L1, IDF_L2 is compared with the at least one field device identifier IDF1, IDF2 and, in the case of matching field device identifiers, proof is provided that the verification datum VDL unambiguously depends on the field device identifier IDF, since the relevant field device identifier IDF1, IDF2, at least one of which is obtained from the operating device (4), is contained in the verification datum VDL.

10. Method (1) according to any one of the claims 7 to 9, **characterized in that** the public certificate key PUBZ of the asymmetric cryptographic certificate key pair PUBZ, PRIVZ is transmitted to the operating device (4) and the integrity of the certificate ZERT is verified with the public certificate key PUBZ on the operating device (4), wherein, in the event of a negative check result, communication of the operating device (4) with the at least one field device (3) is excluded and/or wherein, in the event of a negative check result, corruption of the certificate ZERT is indicated and/or reported.

## Revendications

1. Procédé (1) pour effectuer une communication (2) dépendant d'une autorisation entre au moins un appareil de terrain (3) de la technique de l'automatisation et un appareil de commande (4), l'appareil de terrain (3) et l'appareil de commande (4) étant reliés l'un à l'autre par l'intermédiaire d'une liaison de communication (5) et l'appareil de terrain (3) possédant un identificateur d'appareil de terrain électronique IDF, dans lequel, dans le cas où l'appareil de commande (4) dispose, de la part d'un émetteur d'autorisation (6), d'une autorisation de communiquer avec l'appareil de terrain (3), une donnée de vérification cryptographique VDL dépendant d'un identificateur d'appareil de terrain IDF L, lequel identificateur d'appareil de terrain IDF L est présent sur l'émetteur d'autorisation, est stockée (7) sur l'appareil de commande (4), la donnée de vérification cryptographique VDL étant une fonction f de l'identificateur d'appareil de terrain IDF L, et dans lequel l'appareil de commande (4) reçoit (8) de l'appareil de terrain (3) l'identificateur d'appareil de terrain IDF en préparation de la communication avec l'appareil de terrain (3), dans lequel, lors d'une étape de comparaison cryptographique (9) il est vérifié sur l'appareil de commande (4) si la donnée de vérification VDL dépend de manière univoque de l'identificateur d'appareil de terrain IDF que l'appareil de commande (4) a reçu de l'appareil de terrain (3), et dans lequel l'appareil de commande (4) communique avec l'appareil de terrain (3) dans le cas où la donnée de vérification VDL dépend de manière univoque de l'identificateur d'appareil de terrain IDF et où l'identificateur d'appareil de terrain IDF que l'appareil de commande (4) a reçu de l'appareil de terrain (3) concorde avec l'identificateur d'appareil de terrain IDF_L, et sinon ne communique pas avec l'appareil de terrain (3).

2. Procédé (1) selon la revendication 1, **caractérisé en ce qu'**une première clé de licence est calculée en tant que donnée de vérification VDL au moyen d'un algorithme de licence cryptographique f en fonction de l'identificateur d'appareil de terrain IDF L et en fonction d'une clé secrète KEY, en particulier dans lequel la clé secrète KEY est connue de l'émetteur d'autorisation (6), notamment connue du fabricant de l'appareil de commande (4) et/ou du fabricant d'un logiciel de communication destiné à être exécuté sur l'appareil de commande pour la communication avec l'appareil de terrain (3).

3. Procédé (1) selon la revendication 2, **caractérisé en ce que** l'algorithme de licence cryptographique f effectue le calcul d'une valeur de hachage à partir d'une combinaison de l'identificateur d'appareil de terrain IDL et de la clé secrète KEY.

4. Procédé (1) selon la revendication 2 ou 3, **caractérisé en ce que** la clé secrète KEY est stockée sur l'appareil de commande (4), en particulier est stockée de manière protégée sur l'appareil de commande (4), notamment dans le logiciel de communication compilé ou sous une autre forme chiffrée.

5. Procédé (1) selon l'une quelconque des revendications 2 à 4, **caractérisé en ce que**, lors de l'étape de comparaison cryptographique (9), une deuxième clé de licence VDF est calculée au moyen de l'algorithme de licence cryptographique f en fonction de l'identificateur d'appareil de terrain IDF reçu de l'appareil de terrain (3) et en fonction de la clé secrète KEY stockée sur l'appareil de commande (4), et **en ce que**, pour prouver si la donnée de vérification VDL dépend de manière univoque de l'identificateur de dispositif de terrain IDF, il est vérifié si la première clé de licence concorde avec la deuxième clé de licence VDF.

6. Procédé (1) selon la revendication 5, **caractérisé en ce que** le calcul de la deuxième clé de licence VDF s'effectue sur l'appareil de commande (4).

7. Procédé (1) selon la revendication 1, **caractérisé en ce qu'**un certificat numérique ZERT est établi en tant que donnée de vérification VDL, le certificat numérique ZERT comprenant, dans une première partie de certificat, une clé cryptographique publique PUBL de l'émetteur d'autorisation (6) ainsi que l'au moins un identificateur d'appareil de terrain IDF_L, IDF_L1, IDF_L2 des appareils de terrain (3) pour lesquels l'appareil de commande (4) dispose d'une autorisation de communiquer, et le certificat numérique ZERT comprenant, dans une deuxième partie de certificat, une signature numérique SIGN_PRIVZ calculée à partir de la première partie de certificat, la signature numérique SIGN_PRIVZ étant calculée avec une clé de certificat cryptographique privée PRIVZ d'une paire de clés de certificat cryptographique asymétrique PUBZ, PRIVZ.

8. Procédé (1) selon la revendication 7, **caractérisé en ce que** le certificat numérique ZERT est établi par l'émetteur d'autorisation (6), notamment par le fabricant de l'appareil de commande (4) et/ou par le fabricant du logiciel de communication destiné à être exécuté sur l'appareil de commande (4) pour la communication avec l'appareil de terrain (3).

9. Procédé (1) selon la revendication 7 ou 8, **caractérisé en ce que**, lors de l'étape de comparaison cryptographique (9), l'au moins un identificateur d'appareil de terrain IDF_L1, IDF_L2 contenu dans le certificat numérique ZERT est déterminé (10) sur l'appareil de commande (4), et au moins un identificateur d'appareil de terrain déterminé IDF_L1, IDF_L2 est comparé à l'au moins un identificateur d'appareil de terrain IDF1, IDF2 reçu de l'appareil de terrain (3), et en cas de concordance des identificateurs d'appareil de terrain, la preuve est apportée que la donnée de vérification VDL dépend de manière univoque de l'identificateur d'appareil de terrain IDF, étant donné que l'au moins un identificateur d'appareil de terrain IDF1, IDF2 concerné, reçu par l'appareil de commande (4), est contenu dans la donnée de vérification VDL.

10. Procédé (1) selon l'une des revendications 7 à 9, **caractérisé en ce que** la clé de certificat publique PUBZ de la paire de clés de certificat cryptographique asymétrique PUBZ, PRIVZ est transmise à l'appareil de commande (4), et **en ce que** l'intégrité du certificat ZERT est vérifiée sur l'appareil de commande (4) avec la clé de certificat publique PUBZ, dans lequel, en cas de résultat de vérification négatif, une communication de l'appareil de commande (4) avec l'au moins un appareil de terrain (3) est exclue et/ou, en cas de résultat de vérification négatif, une corruption du certificat ZERT est affichée et/ou signalée.
